# EUROPÄISCHE PATENTSCHRIFT

(11) **EP 2 559 024 B1**
(45) Veröffentlichungstag und Bekanntmachung des Hinweises auf die Patenterteilung: **09.12.2020**
(21) Anmeldenummer: 11715901.2
(22) Anmeldetag: 12.04.2011
(51) Int. Cl.: G10K 9/122, G01H 13/00, G01S 7/521, G01S 15/931

(54) **VERFAHREN ZUM ANSTEUERN EINES ULTRASCHALLSENSORS UND ULTRASCHALLSENSOR**
METHOD FOR DRIVING AN ULTRASOUND SENSOR AND ULTRASOUND SENSOR
PROCÉDÉ POUR COMMANDER UN CAPTEUR ULTRASONORE ET CAPTEUR ULTRASONORE

(30) Priorität: 15.04.2010 DE 102010027780
(43) Veröffentlichungstag der Anmeldung: 20.02.2013
(73) Patentinhaber: Robert Bosch GmbH, 70442 Stuttgart (DE)
(72) Erfinder: KARL, Matthias, 76275 Ettlingen (DE)
(86) Internationale Anmeldenummer: PCT/EP2011/055714
(87) Internationale Veröffentlichungsnummer: WO 2011/141255

(56) Entgegenhaltungen:
- DE-A1-102007 057 124
- US-A1- 2007 041 273
- US-A1- 2007 041 273
- US-A1- 2007 164 631
- US-B1- 6 617 765
- US-B2- 6 958 255
- US-B2- 6 958 255
- YOSHIRO TOMIKAWA ET AL: "Wide Band Ultrasonic Transducer Using Tapered Piezoelectric Ceramics for Non-Destructive Inspection", JAPANESE JOURNAL OF APPLIED PHYSICS,, Bd. 23, Nr. 23-1, 1. Januar 1983 (1983-01-01), Seiten 113-115, XP001420230,

## Beschreibung

Die Erfindung betrifft einen Ultraschallsensor gemäß Anspruch 1 und ein Verfahren zum Ansteuern eines Ultraschallsensors gemäß Anspruch 7.

### Stand der Technik

Seit Jahrzehnten werden Ultraschallsensoren in Fahrzeugen zur Umfelddetektion eingesetzt. Die Meßsysteme beruhen dabei auf einem Echoverfahren, bei dem ein Sendesignal von einem Hindernis reflektiert wird und in Form eines Echosignals an das Fahrzeug zurückgeworfen wird. Anhand der gemessenen Echolaufzeit wird dann der Abstand des Hindernisses von dem Fahrzeug bestimmt. Diese Information wird dann für verschiedenste Fahrerassistenzsysteme, wie Einparkhilfen oder auch Tote-Winkel-Überwachungen eingesetzt. Die Ultraschallsensoren sind dabei zumeist in Form eines Ultraschallwandlers realisiert, der eine Umschaltung zwischen Sende- und Empfangsbetrieb erlaubt.

Herkömmliche Ultraschallsensoren umfassen eine Membran, welche im Sendebetrieb mechanische Schwingungen im Ultraschallbereich in Druckschwankungen der das Fahrzeug umgebenden Luft umwandelt, und einen elektromechanischen Wandler, z.B. in Form eines Piezoschwingers, welcher zum Beispiel mit Hilfe einer Klebeverbindung an die Membran gekoppelt wird und im Sendebetrieb elektrische Signale in Schwingungen im Ultraschallbereich umwandelt. Um der Abstrahlung der Membran eine Richtung zu geben, wird sie im Allgemeinen an ein Chassis befestigt, welches im Gegensatz zur Membran vernachlässigbare Schwingungsamplituden aufweisen sollte.

Ultraschallsensoren werden in der Regel im Bereich ihrer jeweiligen Resonanzfrequenz, welche sich aus den Resonanzeigenschaften der jeweiligen Membran und des jeweiligen Wandlers ergeben, betrieben, da dort eine besonders wirkungsvolle Umwandlung elektrischer in mechanische Schwingungsleistung und umgekehrt gegeben ist.

Aus der DE 10 2006 021 492 A1 ist ein Verfahren zum Einstellen der Resonanzfrequenz eines Schwingungsabschnitts eines Gehäuses eines Ultraschallsensors bekannt, bei dem die Resonanzfrequenz des Schwingungsabschnittes gemessen und mit einem vorher festgelegten Schwellwert einer Soll-Resonanzfrequenz verglichen wird. Anhand des Vergleiches wird die Resonanzfrequenz des Schwingungsabschnitts durch einen entsprechenden Werkstoffabtrag oder - auftrag eingestellt.

US 6 958 255 B2 betrifft einen Ultraschallsensor und dessen Herstellungsverfahren.

US 2007/041273 A1 betrifft einen Schallsensor mit zwei räumlich separaten piezoelektrischen Sensorelementen.

US 2007/164631 A1 offenbart einen kapazitiven, mikrogefertigten Ultraschallsensor.

### Offenbarung der Erfindung

Die vorliegende Erfindung schafft einen Ultraschallsensor gemäß Anspruch 1. Die unterschiedlichen Resonanzeigenschaften werden dabei vorteilhaft durch unterschiedliche Dicken der Membran in den Teilbereichen realisiert.

Die vorliegende Erfindung schafft außerdem ein Verfahren zum Ansteuern eines Ultraschallsensors gemäß Anspruch 7.

Mit der Formulierung "Resonanzfrequenz eines Teilbereichs" sei dabei hier und im Folgenden diejenige Resonanzfrequenz bezeichnet, welche sich aus den Resonanzeigenschaften der Membran und des oder der mit dieser gekoppelten elektromechanischen Wandler(n) ergibt.

Die Erfindung basiert auf der grundlegenden Idee, die Membran und den oder die elektromechanischen Wandler eines Ultraschallsensors derart auszugestalten und anzuordnen sowie den oder die elektromechanischen Wandler derart anzusteuern, dass der Ultraschallsensor mehr als eine Resonanzfrequenz aufweist, bei welcher elektrische Schwingungsleistung besonders effektiv in akustische Schwingungsleistung umgewandelt wird oder umgekehrt. Durch Verwendung von Ultraschallsignalen mit unterschiedlichen Frequenzen ist es möglich, die ultraschallbasierte Umfelddetektion eines Fahrzeuges hinsichtlich ihrer Zuverlässigkeit, Reichweite und/oder Reaktionsschnelligkeit zu verbessern. So können zum Beispiel Echosignale, welche auf Sendesignalen beruhen, welche vor längerer Zeit ausgesandt wurden (Langläuferechos), und/oder Fremd- oder Störsignale mittels Mehrfrequenz- oder Breitbandmodulation deutlich zuverlässiger von Echos unterschieden werden, welche die Folge von vor Kurzem ausgesandten Signalen sind. Dabei können sowohl Signale des eigenen Fahrzeuges als auch eines anderen Fahrzeuges und/oder von Einrichtungen, welche in der Fahrzeugumgebung angeordnet sind, in Betracht kommen.

Gemäß einer Ausführungsform der Erfindung kann die Membran derart ausgestaltet sein, dass sich die Membrandicke sprunghaft ändert. Alternativ dazu kann auch eine kontinuierliche Änderung der Membrandicke vorgesehen sein, was zu einem breiten Spektrum verwendbarer Signalfrequenzen führt.

Abhängig vom konkreten Anwendungsfall und der konkreten Aufgabenstellung kann die Membran symmetrisch oder asymmetrisch ausgebildet sein, so dass sich dementsprechend symmetrische bzw. asymmetrische Abstrahl- und/oder Empfangsrichtungen ergeben.

Ein weiteres Beispiel, welches nicht Teil der Erfindung darstellt, ist ein Ultraschallsensor mit einer Membran, welche mindestens zwei Teilbereiche zum Aussenden und/oder Empfangen von Ultraschallsignalen aufweist, und mit mindestens zwei mit der Membran gekoppelten elektromechanischen Wandlern mit unterschiedlichen Resonanzeigenschaften, was zum Beispiel durch unterschiedliche geometrische Abmessungen der Wandler erreicht werden kann. Dabei ist an die Wandler jeweils ein Steuersignal anlegbar, wobei die Steuersignale voneinander unabhängig sind und jeweils zumindest eine Steuersignalfrequenz umfassen, welche im Bereich einer Resonanzfrequenz des jeweiligen Teilbereichs der Membran liegt.

Um symmetrische oder asymmetrische Abstrahl- und/oder Empfangsrichtungen zu erreichen, können die Wandler entsprechend symmetrisch bzw. asymmetrisch an die Membran angekoppelt sein.

Ein Beispiel, welches nicht Teil der Erfindung darstellt, ist ein Verfahren zum Ansteuern eines Ultraschallsensors mit einer Membran, welche mindestens zwei Teilbereiche zum Aussenden und/oder Empfangen von Ultraschallsignalen aufweist, und mindestens zwei in jeweils einem der Teilbereiche mit der Membran gekoppelten elektromechanischen Wandlern mit unterschiedlichen Resonanzeigenschaften. Erfindungsgemäß wird an die Wandler jeweils ein Steuersignal angelegt, wobei die Steuersignale voneinander unabhängig sind und jeweils zumindest eine Steuersignalfrequenz umfassen, welche im Bereich einer Resonanzfrequenz des jeweiligen Teilbereichs der Membran liegt.

Ein weiteres Beispiel, welches nicht Teil der Erfindung darstellt, ist ein Ultraschallsensor mit einer Membran und mindestens einem mit der Membran gekoppelten elektromechanischen Wandler mit mindestens drei Elektroden, wobei der Wandler je nach Ansteuerung der Elektroden unterschiedliche Resonanzeigenschaften aufweist. Diese Ausgestaltung hat den Vorteil, dass bereits ein einziger elektromechanischer Wandler in Verbindung mit einer "klassischen" Membran ausreicht, um einen Mehrfrequenz-Ultraschallsensor zu realisieren.

Ein weiteres Beispiel, welches nicht Teil der Erfindung darstellt, ist ein Verfahren zum Ansteuern eines Ultraschallsensors mit einer Membran und mindestens einem mit der Membran gekoppelten elektromechanischen Wandler, wobei der Wandler mindestens drei Elektroden aufweist und ein erstes Elektrodenpaar angesteuert wird, um ein Ultraschallsignal mit einer ersten Sendesignalfrequenz auszusenden, und eine zweites Elektrodenpaar angesteuert wird, um ein Ultraschallsignal mit einer zweiten Sendesignalfrequenz auszusenden.

Ein weiteres Beispiel, welches nicht Teil der Erfindung darstellt, sieht vor, mit Hilfe von Steuersignalfrequenzen des Steuersignals des Wandlers eine bevorzugte Übertragungsrichtung von Ultraschallsignalen festzulegen. Dazu werden die Signalfrequenzen derart festgelegt, dass entweder die Wandlung der elektrischen Schwingungsleistung in akustische Schwingungsleistung (Sendebetrieb) bei Resonanzfrequenz und damit besonders effektiv erfolgt oder die Wandlung der akustischen Schwingungsleistung in elektrische Schwingungsleistung (Empfangsbetrieb) bei Resonanzfrequenz und damit besonders effektiv erfolgt. Sende- und Empfangsfrequenzen können zum Beispiel augrund von Dopplereffekten voneinander abweichen.

Weitere Merkmale und Vorteile von Ausführungsformen der Erfindung ergeben sich aus der nachfolgenden Beschreibung mit Bezug auf die beigefügten Figuren.

### Kurze Beschreibung der Figuren

Es zeigen:
- Fig. 1: eine schematische Schnittdarstellung eines Ultraschallsensors gemäß einer ersten Ausführungsform der Erfindung,
- Fig. 2: eine schematische Schnittdarstellung eines Ultraschallsensors gemäß einer zweiten Ausführungsform der Erfindung,
- Fig. 3: eine schematische Schnittdarstellung eines Ultraschallsensors gemäß einer dritten Ausführungsform der Erfindung,
- Fig. 4: eine schematische Schnittdarstellung eines Ultraschallsensors gemäß einer vierten Ausführungsform der Erfindung,
- Fig. 5: eine schematische Schnittdarstellung eines Ultraschallsensors gemäß einem Beispiel, welches nicht Teil der Erfindung ist,
- Fig. 6: eine schematische Schnittdarstellung eines elektromechanischen Wandlers mit drei Elektroden, der nicht Teil der Erfindung ist.
- Fig. 7: eine schematische Darstellung eines elektromechanischen Wandlers mit drei Elektroden, der nicht Teil der Erfindung ist, in Draufsicht und
- Fig. 8: eine schematische Darstellung eines Ultraschallsensors gemäß einer fünften Ausführungsform der Erfindung.

### Beschreibung der Ausführungsbeispiele

In den Figuren sind identische oder funktionsgleiche Komponenten jeweils mit dem gleichen Bezugszeichen gekennzeichnet.

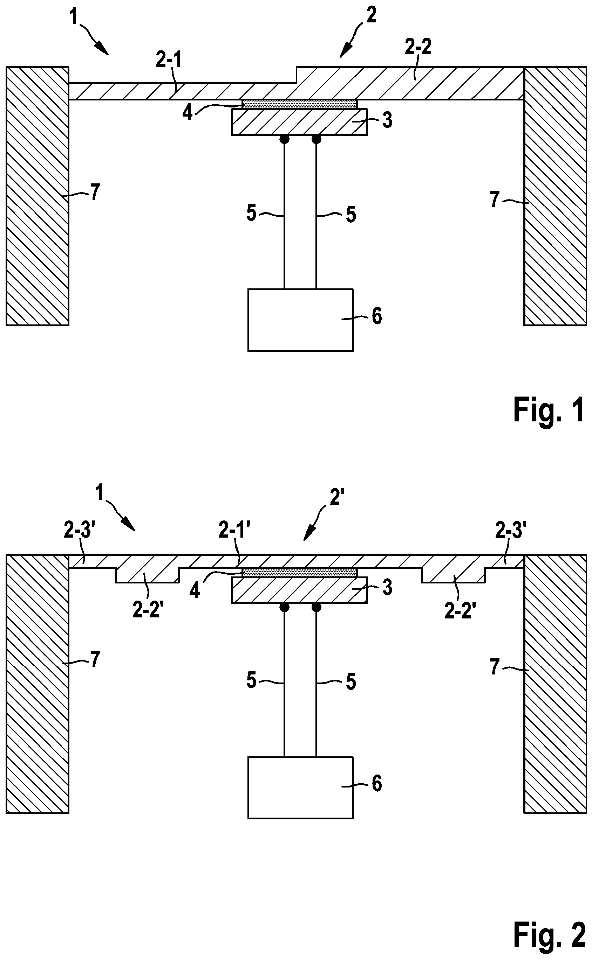

Fig. 1 zeigt schematisch einen Ultraschallsensor 1 gemäß einer ersten Ausführungsform der Erfindung. An einer Membran 2 ist ein elektromechanischer Wandler in Form eines Piezoschwingers 3 mit Hilfe einer Kleberschicht 4 befestigt und auf diese Weise mit der Membran 2 gekoppelt. Über elektrische Anschlüsse 5 wird an den Piezoschwinger 3 über eine Steuereinheit 6 ein Steuersignal angelegt, infolge dessen der Piezoschwinger 3 in mechanische Schwingungen versetzt wird. Diese Schwingungen werden über die Kleberschicht 4 an die Membran 2 geleitet. Die Membran 2 erzeugt in der vor ihr liegenden Luft Druckschwankungen, wodurch Schallwellen ausgesandt werden. Um den ausgesendeten Schallwellen eine Richtung zu geben, ist die Membran an einem Chassis 7 befestigt, welches im Gegensatz zur Membran vernachlässigbare Schwingungsamplituden aufweist. Beim Empfang von Schallwellen läuft der Signalpfad entsprechend umgekehrt, das heißt ankommende akustische Schallwellen werden letztendlich in elektrische Signale gewandelt.

Die Membran 2 umfasst zwei Teilbereiche 2-1 und 2-2, welche unterschiedliche Dicken oder Materialstärken aufweisen, wodurch unterschiedliche Resonanzeigenschaften der beiden Teilbereiche begründet sind. Der Übergang zwischen den beiden Teilbereichen 2-1 und 2-2 ist bei der dargestellten Ausführungsform sprunghaft ausgeführt, so dass sich in beiden Teilbereichen 2-1 und 2-2 jeweils eine Resonanzfrequenz ergibt, bei welcher eine Umwandlung von elektrischer Schwingungsleistung in akustische Schwingungsleistung oder umgekehrt besonders effektiv erfolgt. Durch Anlegen eines Steuersignals, welches erfindungsgemäß zumindest diese beiden Resonanzfrequenzen oder vorzugsweise zumindest zwei Frequenzen im Bereich dieser Resonanzfrequenzen umfasst, kann der Ultraschallsensor gleichzeitig auf zwei Resonanzfrequenzen betrieben werden. Dabei kann mit Hilfe der Signalfrequenzen des Steuersignals eine bevorzugte Übertragungsrichtung des Ultraschallsensors 1, also Senden oder Empfangen festegelegt werden. Dazu wird die Signalfrequenz entweder identisch zu der Resonanzfrequenz gewählt, so dass die Wandlung der elektrischen in die mechanische Schwingungsleistung und damit der Sendebetrieb optimal ist oder es wird eine Signalfrequenz im Bereich der Resonanzfrequenz gewählt, welche dazu führt, dass ein mögliches Echosignal genau die Resonanzfrequenz aufweist und damit zu einer optimalen Wandlung der mechanischen in die elektrische Schwingungsleistung (Empfangsbetrieb) führt. Frequenzunterschiede zwischen Sende- und Echosignal können dabei beispielsweise auf dem Doppler-Effekt beruhen.

Im dargestellten Ausführungsbeispiel ist der Piezoschwinger 3 unterhalb des Übergangsbereichs zwischen den Teilbereichen 2-1 und 2-1 der Membran 2 angeordnet. Dies ist aber für die Verwendung der Erfindung nicht zwingend erforderlich. Es ist auch ausreichend, wenn die Teilbereiche der Membran mit unterschiedlichen Resonanzeigenschaften in einem Bereich um einen elektromechanischen Wandler angeordnet sind.

Eine derartige Ausführungsform ist in Fig. 2 dargestellt. Diese Ausführungsform unterscheidet sich von der in Fig. 1 dargestellten Ausführungsform im Wesentlichen darin, dass die Membran 2' in einem ersten Teilbereich 2-1' über dem Piezoschwinger 3 eine konstante Dicke aufweist, auf beiden Seiten des Piezoschwingers 3 aber zweite Teilbereiche 2-2' mit erhöhter Dicke oder Materialstärke und damit veränderter Resonanzeigenschaft angeordnet sind. In dritten Teilbereichen 2-3', über welche die Membran 2' an dem Chassis 7 befestigt ist, weist die Membran wiederum die Dicke des ersten Teilbereichs 2-1' oder alternativ dazu auch eine beliebige weitere Dicke auf. Um eine möglichst gute Entkopplung zwischen der Membran 2 und dem Chassis 7 zu erreichen, ist es vorteilhaft, die Randbereiche der Membran 2', welche unmittelbar an das Chassis 7 angrenzen. möglichst dünn zu gestalten. Diese Regel ist auch auf alle anderen Ausführungsbeispiele anwendbar, so dass auch bei diesen Ausführungsformen "verdünnte" Randbereiche der Membran 2 vorgesehen werden können. Es sei aber darauf hingewiesen, dass derartige ausgestaltete Randbereiche nicht dem Aussenden oder Empfangen eines Ultraschallsignals dienen, sonder einzig und allein zur Entkopplung vom Chassis 7.

Die Ausführungsform gemäß Fig. 2 unterscheidet sich von derjenigen der Fig. 2 weiterhin dadurch, dass die sprunghaft ausgeführten Übergänge zwischen den einzelnen Teilbereichen symmetrisch angeordnet und die Membran 2' damit symmetrisch ausgebildet ist. Durch symmetrische oder asymmetrische Anordnung können entsprechend symmetrische bzw. asymmetrische Abstrahl- oder Empfangsrichtungen realisiert werden.

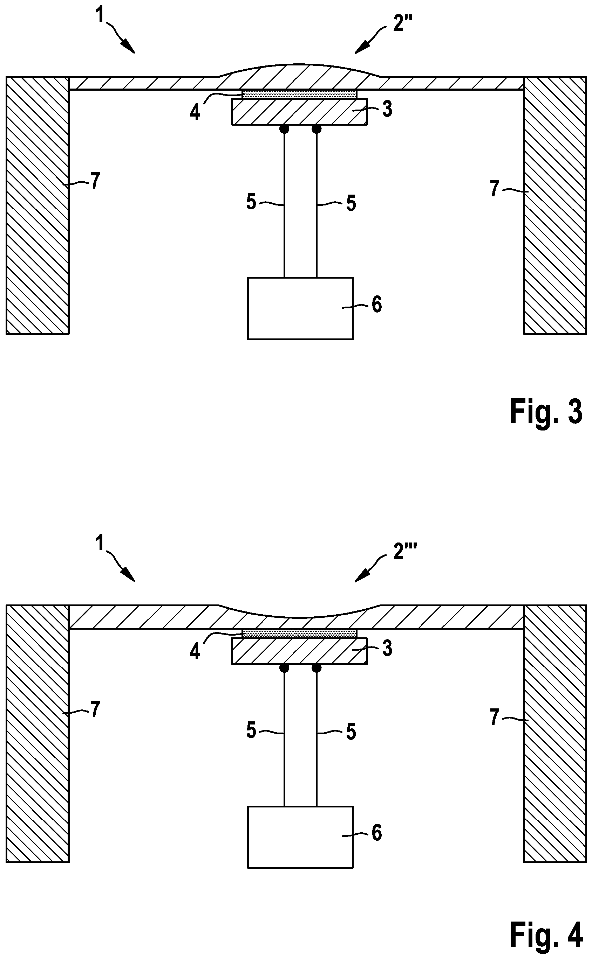

Die Figuren 3 und 4 zeigen weitere Ausführungsformen erfindungsgemäße Ultraschallsensoren. Diese unterscheiden sich von der in Fig. 1 dargestellten Ausführungsform dadurch, dass sich die Dicke der Membranen 2" (siehe Fig. 3) und 2'" (siehe Fig. 4) nicht sprunghaft, sondern kontinuierlich ändern. Im speziellen ist die Membran 2" gemäß Fig. 3 konvex und die Membran 2'" gemäß Fig. 4 konkav ausgeführt. Auf diese Weise entsteht sozusagen eine Vielzahl von Teilbereichen der Membran 2", 2'" mit unterschiedlichen mechanischen Eigenschaften, was zu einem breiten Spektrum verwendbarer Resonanzfrequenzen führt.

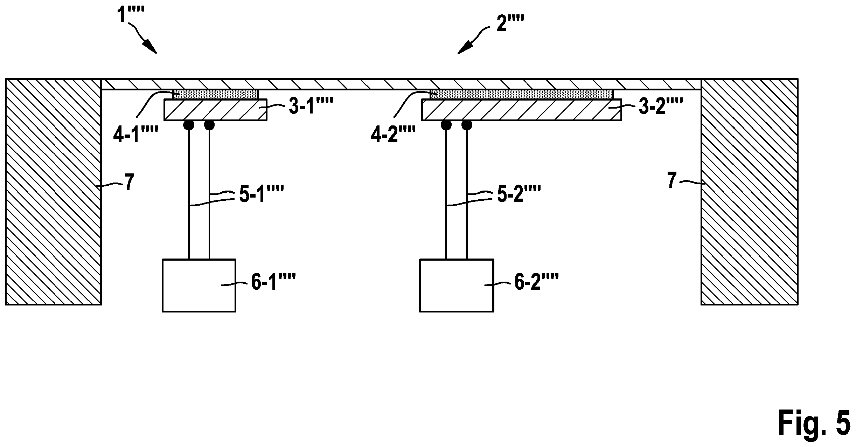

In Figur 5 ist ein Beispiel Ultraschallsensors 1"" dargestellt, welches nicht Teil der Erfindung ist. Dabei sind an einer "herkömmlichen" Membran 2"" mit konstanter Dicke zwei elektromechanische Wandler in Form von Piezoschwingern 3-1"" und 3-2"" mit Hilfe von Kleberschichten 4-1"" bzw. 4-2"" an Teilbereichen der Membran 2"" befestigt und auf diese Weise mit der Membran 2"" gekoppelt. Die beiden Piezoschwinger 3-1"" und 3-2"" weisen dabei unterschiedliche geometrische Abmessungen und dadurch bedingt auch unterschiedlich Resonanzeigenschaften auf. Durch jeweiliges Anlegen eines Steuersignals, wobei die Steuersignale der beiden Piezoschwinger 3-1"" und 3-2"" voneinander unabhängig sind und jeweils zumindest eine Steuersignalfrequenz umfassen, welche im Bereich einer Resonanzfrequenz des jeweiligen Teilbereichs der Membran liegt, wird auch durch diese Anordnung ein Ultraschallsensor realisiert, der bei zwei Resonanzfrequenzen betreibbar ist. Die beiden Steuersignale werden durch zwei separate Steuereinheiten 6-1"" und 6-2"" erzeugt und über elektrische Anschlüsse 5-1"" bzw. 5-2"" an die Piezoschwinger 3-1"" bzw. 3-2"" angelegt. Alternativ dazu können die Steuersignale aber auch durch eine gemeinsame Steuereinheit erzeugt werden. Aufgrund der asymmetrischen Anordnung werden auf einfache Weise asymmetrische Abstrahl- und/oder Empfangscharakteristiken erreicht. Selbstverständlich können auch mehr als zwei Piezoschwinger vorgesehen sein, welche im Bedarfsfall auch symmetrisch angeordnet werden können.

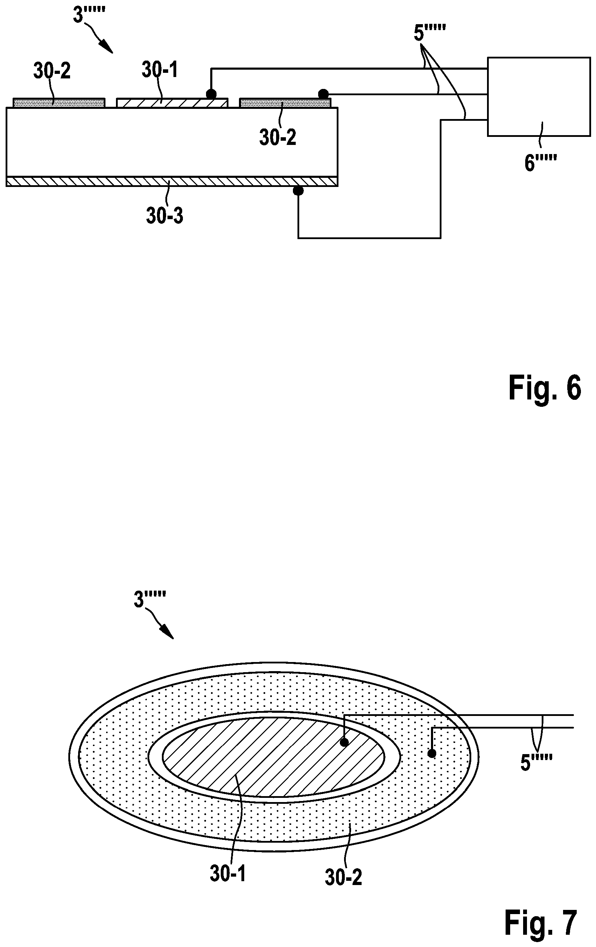

Ein weiteres Beispiel, welches nicht Teil der Erfindung darstellt (siehe Fig. 6 und 7), sieht die Verwendung eines Piezoschwingers 3""'vor, welcher drei Elektroden 30-1, 30-2 und 30-3 aufweist. Dabei ist eine erste Elektrode 30-1 im zentralen oberen Bereich des Piezoschwingers 3"', eine zweite Elektrode 30-2 im Randbereich der Oberseite des Piezoschwingers 3""'und eine dritte Elektrode 30-3 an der Unterseite des Piezoschwingers 3""'angeordnet. Alle drei Elektroden 30-1, 30,2 und 30-3 können durch eine Steuereinheit 6"'" über entsprechende elektrische Anschlüsse 5"'" angesteuert werden. Aufgrund der Anordnung und Ausgestaltung der Elektroden 30-1, 30,2 und 30-3 ergeben sich bei Ansteuerung eines ersten Elektrodenpaars, bestehend aus den Elektroden 30-1 und 30-3, andere Resonanzeigenschaften und auch Richtcharakteristiken als bei Ansteuerung eines zweiten Elektrodenpaars, bestehend aus den Elektroden 30-2 und 30-3. Wird ein derartiger Piezoschwinger 3""' an eine Membran gekoppelt, so ist es selbst bei einer "herkömmlichen" Membran mit konstanter Dicke möglich, den Ultraschallsensor mit unterschiedlichen Resonanzfrequenzen zu betreiben.

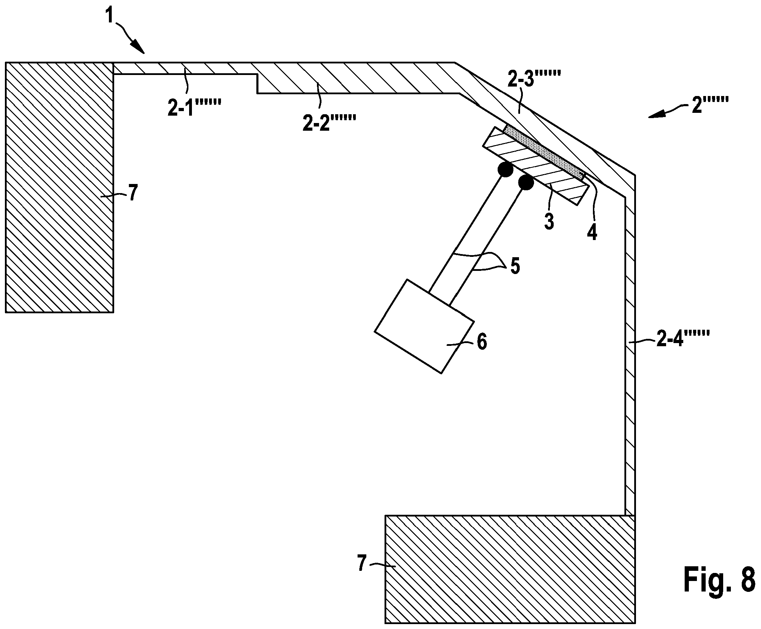

Fig. 8 zeigt eine weitere Ausführungsform der Erfindung, bei welcher eine Membran 2""" vorgesehen ist, welche vier Teilbereiche 2-1""", 2-2""", 2-3""" und 2-4""" umfasst. Diese sind so ausgebildet, dass sich an einen ersten Teilbereich 2-1"" welcher an einem linken Teil des Chassis 7 befestigt ist und eine erste Dicke aufweist, geradlinig ein zweiter Teilbereich 2-2"" mit einer zweiten Dicke anschließt. An den zweiten Teilbereich 2-2"" schließt sich in einem vorgegebenen Winkel ein dritter Teilbereich 2-3"" an, welcher eine dritte Dicke aufweist und an den dritten Teilbereich 2-3"" schließt sich schließlich in einem weiteren vorgegebenen Winkel ein vierter Teilbereich 2-4"" mit einer vierten Dicke an, welcher an dem rechten Teil des Chassis 7 befestigt ist. Im Bereich des dritten Teilbereichs 2-3"" ist der Piezoschwinger 3 mit Hilfe der Kleberschicht 4 an der Membran 2"" befestigt und damit mit dieser gekoppelt. Die unterschiedlichen Dicken der einzelnen Teilbereiche der Membran 2"" führen auch bei dieser Ausführungsform zu unterschiedlichen Resonanzeigenschaften, welche durch geeignete Ansteuerung dazu genutzt werden können, einen Mehrfrequenz-Ultraschallsensor zu realisieren. Darüber hinaus werden durch die dreidimensionale Ausgestaltung der Membran 2""" auch verschiedene bevorzugte Ausrichtungen der Sende- oder Empfangssignale erreicht.

## Patentansprüche

1. Ultraschallsensor (1) mit
- einer Membran (2; 2'; 2"; 2"'; 2"""), welche einen ersten Teilbereich (2-1; 2-1'; 2-1""") zum Aussenden und/oder Empfangen von Ultraschallsignalen aufweist ;
- einer Kleberschicht (4) ;
- elektrischen Anschlüssen (5) ;
- mindestens einem mit der Membran (2; 2'; 2"; 2"'; 2""") mit Hilfe der Kleberschicht (4) gekoppelten Piezoschwinger als elektromechanischen Wandler (3), und
- einer Steuereinheit (6), wobei über die elektrischen Anschlüsse (5) und über die Steuereinheit (6) an den Piezoschwinger (3) ein Steuersignal anlegbar ist,
wobei die Membran (2; 2'; 2"; 2"'; 2""") mindestens einen zweiten Teilbereich (2-2; 2-2'; 2-2""", 2-3""", 2-4""") zum Aussenden und/oder Empfangen von Ultraschallsignalen aufweist;
wobei die Membran (2; 2'; 2"; 2"'; 2""") in dem ersten und in dem zweiten Teilbereich (2-1, 2-2; 2-1', 2-2'; 2-1""", 2-2""", 2-3""", 2-4""") unterschiedliche Resonanzeigenschaften aufweist, aus denen sich eine erste und eine zweite Resonanzfrequenz ergibt;
**dadurch gekennzeichnet, dass** der Ultraschallsensor (1) dazu ausgestaltet ist, durch Anlegen des Steuersignals, welches zumindest die erste und die zweite Resonanzfrequenz umfasst, den Ultraschallsensor (1) gleichzeitig auf der ersten Resonanzfrequenz und der zweiten Resonanzfrequenz zu betreiben.

2. Ultraschallsensor nach Anspruch 1, wobei die unterschiedlichen Resonanzeigenschaften dadurch realisiert werden, dass die Membran (2; 2'; 2"; 2'"; 2""") in den Teilbereichen (2-1,2-2; 2-1', 2-2'; 2-1""", 2-2""", 2-3""", 2-4""") unterschiedlich dick ist.

3. Ultraschallsensor nach Anspruch 2, wobei die Dicke der Membran (2; 2'; 2"; 2'"; 2""") sich sprunghaft ändert.

4. Ultraschallsensor nach Anspruch 2, wobei die Dicke der Membran (2; 2'; 2"; 2'"; 2""") sich kontinuierlich ändert.

5. Ultraschallsensor nach einem der vorhergehenden Ansprüche, wobei die Membran (2; 2'; 2"; 2"'; 2""") symmetrisch ausgebildet ist.

6. Ultraschallsensor nach einem der Ansprüche 1-4, wobei die Membran (2; 2'; 2"; 2"'; 2""") asymmetrisch ausgebildet ist.

7. Verfahren zum Ansteuern eines Ultraschallsensors (1) mit einer Membran (2; 2'; 2"; 2'"; 2"""), welche mindestens zwei Teilbereiche (2-1, 2-2; 2-1', 2-2'; 2-1""", 2-2""", 2-3""", 2-4""") mit unterschiedlichen Resonanzeigenschaften aufweist, aus denen sich eine erste und eine zweite Resonanzfrequenz ergibt, und mindestens einem mit der Membran (2; 2'; 2"; 2'"; 2""") mit Hilfe einer Kleberschicht (4) gekoppelten Piezoschwinger als elektromechanischen Wandler (3), bei dem ein Steuersignal mittels elektrischer Anschlüsse (5) und einer Steuereinheit (6) mit gleichzeitig mindestens zwei unterschiedlichen Steuersignalfrequenzen an den elektromechanischen Wandler (3) angelegt wird, wobei das Steuersignal zumindest die erste und die zweite Resonanzfrequenz umfasst.

## Claims

1. Ultrasonic sensor (1) having
- a membrane (2; 2'; 2"; 2"'; 2""") which has a first section (2-1; 2-1'; 2-1""") for emitting and/or receiving ultrasonic signals;
- an adhesive layer (4);
- electrical connections (5);
- at least one piezo oscillator, as an electromechanical transducer (3), which is coupled to the membrane (2; 2'; 2"; 2"'; 2""" ) with the aid of the adhesive layer (4), and
- a control unit (6), wherein a control signal can be applied to the piezo oscillator (3) via the electrical connections (5) and via the control unit (6),
wherein the membrane (2; 2'; 2"; 2"'; 2""" ) has at least one second section (2-2; 2-2'; 2-2""", 2-3""", 2-4""") for emitting and/or receiving ultrasonic signals;
wherein the membrane (2; 2'; 2"; 2"'; 2""") has different resonant properties in the first and second sections (2-1, 2-2; 2-1', 2-2'; 2-1""", 2-2""", 2-3""", 2-4"""), which resonant properties result in a first resonant frequency and a second resonant frequency;
**characterized in that** the ultrasonic sensor (1) is configured to operate the ultrasonic sensor (1) at the first resonant frequency and at the second resonant frequency at the same time by applying the control signal which comprises at least the first and the second resonant frequency.

2. Ultrasonic sensor according to Claim 1, wherein the different resonant properties are implemented by virtue of the fact that the membrane (2; 2'; 2"; 2"'; 2""") has a different thickness in the sections (2-1, 2-2; 2-1', 2-2'; 2-1""", 2-2""", 2-3""", 2-4""").

3. Ultrasonic sensor according to Claim 2, wherein the thickness of the membrane (2; 2'; 2"; 2"'; 2""") changes suddenly.

4. Ultrasonic sensor according to Claim 2, wherein the thickness of the membrane (2; 2'; 2"; 2"'; 2""") changes continuously.

5. Ultrasonic sensor according to one of the preceding claims, wherein the membrane (2; 2'; 2"; 2'"; 2""") is symmetrical.

6. Ultrasonic sensor according to one of Claims 1-4, wherein the membrane (2; 2'; 2"; 2"'; 2""") is asymmetrical.

7. Method for controlling an ultrasonic sensor (1) having a membrane (2; 2'; 2"; 2"'; 2""") which has at least two sections (2-1, 2-2; 2-1', 2-2'; 2-1""", 2-2""", 2-3""", 2-4""") with different resonant properties, which result in a first resonant frequency and a second resonant frequency, and at least one piezo oscillator, as an electromechanical transducer (3), which is coupled to the membrane (2; 2'; 2"; 2"'; 2""" with the aid of an adhesive layer (4), in which a control signal is applied with at least two different control signal frequencies at the same time to the electromechanical transducer (3) by means of electrical connections (5) and a control unit (6), wherein the control signal comprises at least the first and the second resonant frequency.

## Revendications

1. Capteur ultrasonore (1), comprenant
- une membrane (2 ; 2' ; 2" ; 2'" ; 2""") qui présente une première partie (2-1 ; 2-1' ; 2-1""") pour émettre et/ou recevoir des signaux ultrasonores ;
- une couche adhésive (4) ;
- des connexions électriques (5) ;
- au moins un oscillateur piézoélectrique, sous la forme d'un transducteur électromécanique (3), couplé à la membrane (2 ; 2' ; 2" ; 2'" ; 2""") à l'aide de la couche adhésive (4), et
- une unité de commande (6), un signal de commande pouvant être appliqué à l'oscillateur piézoélectrique (3) par les connexions électriques (5) et par l'unité de commande (6),
dans lequel la membrane (2 ; 2' ; 2" ; 2'" ; 2""") présente au moins une deuxième partie (2-2 ; 2-2' ; 2-2""", 2-3""", 2-4""") pour émettre et/ou recevoir des signaux ultrasonores ;
dans lequel la membrane (2 ; 2' ; 2" ; 2'" ; 2""") présente différentes propriétés de résonance dans la première et dans la deuxième partie (2-1, 2-2 ; 2-1', 2-2' ; 2-1""", 2-2""", 2-3""", 2-4""") dont résultent une première et une deuxième fréquence de résonance ; **caractérisé en ce que** le capteur ultrasonore (1) est configuré pour faire fonctionner le capteur ultrasonore (1) en même temps sur la première fréquence de résonance et la deuxième fréquence de résonance en appliquant le signal de commande qui comprend au moins la première et la deuxième fréquence de résonance.

2. Capteur ultrasonore selon la revendication 1, dans lequel les différentes propriétés de résonance sont réalisées en ce que la membrane (2 ; 2' ; 2" ; 2'" ; 2""") présente une épaisseur différente dans les parties (2-1, 2-2 ; 2-1', 2-2' ; 2-1""", 2-2""", 2-3""" 2-4""") .

3. Capteur ultrasonore selon la revendication 2, dans lequel l'épaisseur de la membrane (2 ; 2' ; 2" ; 2'" ; 2""") change de manière discontinue.

4. Capteur ultrasonore selon la revendication 2, dans lequel l'épaisseur de la membrane (2 ; 2' ; 2" ; 2'" ; 2""") change en continu.

5. Capteur ultrasonore selon l'une quelconque des revendications précédentes, dans lequel la membrane (2 ; 2' ; 2" ; 2'" ; 2""") est réalisée de manière symétrique.

6. Capteur ultrasonore selon l'une quelconque des revendications 1 à 4, dans lequel la membrane (2 ; 2' ; 2" ; 2'" ; 2""") est réalisée de manière asymétrique.

7. Procédé permettant de piloter un capteur ultrasonore (1) comprenant une membrane (2 ; 2' ; 2" ; 2'" ; 2""") qui présente au moins deux parties (2-1, 2-2 ; 2-1', 2-2' ; 2-1""", 2-2""", 2-3""", 2-4""") ayant différentes propriétés de résonance dont résultent une première et une deuxième fréquence de résonance, et au moins un oscillateur piézoélectrique, sous la forme d'un transducteur électromécanique (3), couplé à la membrane (2 ; 2' ; 2" ; 2'" ; 2""") à l'aide d'une couche adhésive (4), dans lequel un signal de commande est appliqué au transducteur électromécanique (3) au moyen de connexions électriques (5) et d'une unité de commande (6) avec en même temps au moins deux fréquences de signal de commande différentes, le signal de commande comprenant au moins la première et la deuxième fréquence de résonance.
